# EUROPÄISCHE PATENTSCHRIFT

(11) **EP 0 506 694 B1**
(45) Veröffentlichungstag und Bekanntmachung des Hinweises auf die Patenterteilung: **22.02.1995**
(21) Anmeldenummer: 91900210.5
(22) Anmeldetag: 11.12.1990
(51) Int. Cl.: H04N 7/06

(54) **VERFAHREN ZUM ÜBERTRAGEN VON DIGITALEN INFORMATIONEN, INSBESONDERE TONINFORMATION, IN EINEM FERNSEHKANAL**
PROCESS FOR TRANSMITTING DIGITAL DATA, IN PARTICULAR SOUND DATA, IN A TV CHANNEL
PROCEDE POUR LA TRANSMISSION D'INFORMATIONS NUMERIQUES, EN PARTICULIER D'INFORMATION SONORES, SUR UN CANAL DE TELEVISION

(30) Priorität: 22.12.1989 DE 3942570
(43) Veröffentlichungstag der Anmeldung: 07.10.1992
(73) Patentinhaber: Thomson Consumer Electronics Sales GmbH, 30453 Hannover (DE)
(72) Erfinder: DINSEL, Siegfried, D-8000 München 40 (DE)
(86) Internationale Anmeldenummer: EP9002153
(87) Internationale Veröffentlichungsnummer: WO9110325

(56) Entgegenhaltungen:
- EP-A- 0 243 923
- DE-A- 1 809 043
- DE-A- 3 718 906
- DE-A- 3 742 280
- US-A- 4 779 129
- International Conference on Consumer Electronics 1987, 2-5 June 1987, IEEE, Craig C. Todd: "A compatible digital audio format for broadcast and cable television", pages 90-91, see abstract; page 90, paragraphs "Basics of new system" and "BTSC compatibility tests"
- 16th International TV Symposium, Monteux, CH, G. Betnér: "Nicam 728 introduction in Sweden", pages 235-241, siehe Seite 236, Zeile 8 - Seite 237, Zeile 12

## Beschreibung

Die Erfindung bezieht sich auf ein Verfahren gemäß dem Oberbegriff des Patentanspruchs 1.

Zur Übertragung eines monofonen Fernseh-Tonsignals wird weltweit oberhalb des Bildsignals z.B. bei 5,5 MHz ein FM-modulierter RF-Tonträger eingefügt. Für die zusätzliche Übertragung von stereofonen Programmen kann entweder (Japan, USA) der vorhandene Tonträger im FM- oder AM-Frequenzmultiplex zusätzlich mit dem stereofonen Differenzsignal L-R moduliert werden oder (z.B. Bundesrepublik Deutschland) es kann ein zweiter frequenzmodulierter RF-Tonträger bei z.B. 5,75 MHz mit dem stereofonen Signalanteil R bzw. (Südkorea) L-R moduliert werden. Anstelle von stereofonen Programmen können in der gleichen Weise auch zweisprachige Programme übertragen werden (Zweiton-Übertragung), wobei zur empfängerseitigen, automatischen Umschaltung der Betriebszustände "Mono", "Stereo", "Zweiton" ein Schaltträger bei 55 kHz im Basisband dem stereofonen Anteil bzw. dem fremdsprachlichen Kanal zugefügt wird. In Skandinavien und Großbritannien wird auf dem zweiten RF-Tonträger kein analoger Signalanteil, sondern das vollständige stereofone Tonsignal in digitaler Codierung (NICAM) mit einer Bitflußrate von 720 kbit/s übertragen.

Infolge des durch die CD-Technik gestiegenen Qualitätsbewußtseins der Verbraucher bezüglich der Tonwiedergabe kann die rein analoge Fernsehtonübertragung selbst bei stereofoner Wiedergabe nicht mehr zufriedenstellen. Die bekannte digitale Tonsignalübertragung auf einem zusätzlichen RF-Tonträger bedingt wegen der hohen Bitflußrate von 720 kbit/s eine ungünstige Plazierung des RF-Tonträgers am Rande des 7 MHz-breiten Fernsehkanals, was zu Übersprechen vom und zum benachbarten Fernsehkanal führt. In Ländern, in denen wie in der Bundesrepublik Deutschland ein zweiter RF-Tonträger bereits mit einem analogen stereofonen Signalenteil FM-moduliert ist, läßt sich das bekannte NICAM-Verfahren überhaupt nicht anwenden.

In DE-A-1 809 043 wird innerhalb eines Fernsehtonkanals oberhalb des NF-Basisspektrums ein analog codiertes Faksimile-Signal übertragen. Das Spektrum dieses Signals ist aber stark bildinhalts-abhängig und kann zu Bild- bzw. Tonstörungen beim Fernsehempfang führen.

In DE-A-3 718 906 werden zusätzliche, mit digital codierten Tonsignalen modulierte RF-Tonträger vorgeschlagen. Solche zusätzlichen Tonträger können entweder zu Störungen im Bildsignal oder im Nachbar-Fernsehkanal führen. Außerdem ist sender- und empfängerseitig ein hoher zusätzlicher Schaltungsaufwand erforderlich.

Die Aufgabe der Erfindung besteht demgegenüber darin, in einem vorhandenen Fernsehsystem mit geringem zusätzlichem Schaltungsaufwand und unter Vermeidung von Störungen des normalen Fernsehempfangs zusätzlich digitale, codierte Informationen zu übertragen.

Diese Aufgabe wird erfindungsgemäß durch die Merkmale des Patentanspruchs 1 gelöst.

Vorteilhafte Ausgestaltungen und Weiterbildungen des Verfahrens nach Anspruch 1 ergeben sich aus den abhängigen Ansprüchen.

Die Erfindung wird anhand der Zeichnungen näher erläutert.

Es zeigt:
- Fig. 1: ein RF-Frequenzspektrum des Fernsehkanals mit zwei Tonträgern;
- Fig. 2a: ein Frequenzdiagramm des Basisbandes des dem ersten Tonträger gemäß Fig. 1 aufmodulierten Ton-/Datensignals;
- Fig. 2b: ein Frequenzdiagramm des Basisbandes des dem zweiten Tonträger gemäß Fig. 1 aufmodulierten Ton-/Datensignals;
- Fig. 3a: ein Blockschaltbild eines zur sendeseitigen Durchführung des erfindungsgemäßen Verfahrens vorgesehenen, beispielhaften Fernseh-Tonsenders, und
- Fig. 3b: ein Blockschaltbild eines zur empfangsseitigen Durchführung des erfindungsgemäßen Verfahrens vorgesehenen, beispielhaften Fernseh-Empfängers.

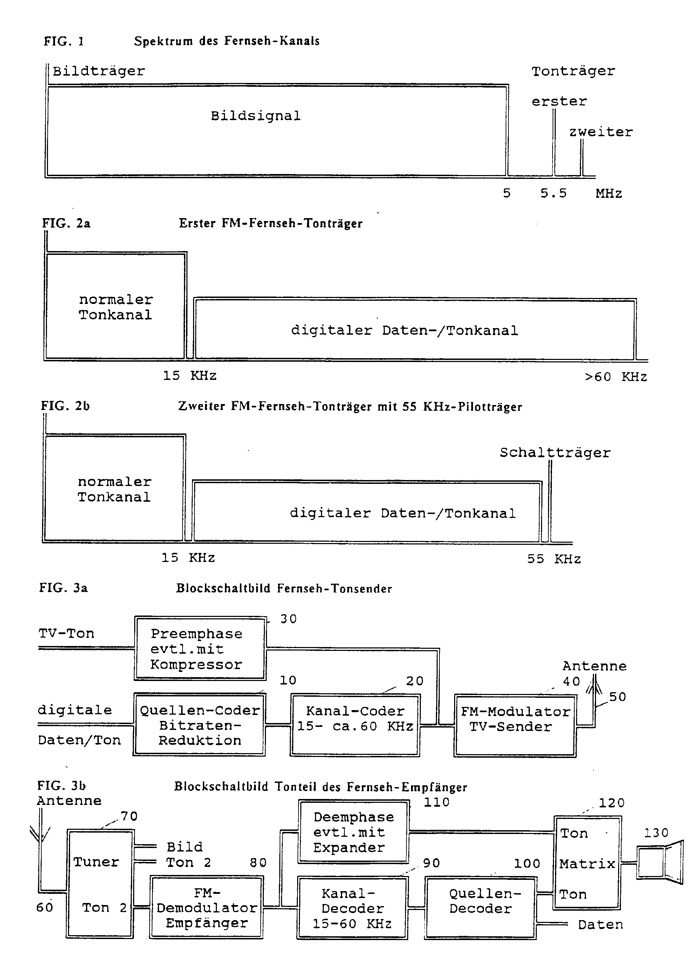

Bei dem erfindungsgemäßen Verfahren werden gemäß Fign. 2a und 2b digitale Signale, die sowohl für die Tonals auch für eine reine Datenübertragung genutzt werden können, als digitaler Daten-Tonkanal auf dem oder den vorhandenen RF-Tonträger(n) im Bereich des Basisbandes oberhalb des normalen Tonkanals, d.h. oberhalb 15 kHz übertragen. Im Falle des bekannten Zweitonträger-Stereo-Systems (Fig. 1) können beide RF-Tonträger mit digitalen Zusatzsignalen moduliert werden. Der zweite RF-Tonträger muß wegen des 55 kHz-Schaltträgers (Fig. 2b) für die Mono/Stereo/Zweiton-Umschaltung mit leicht reduzierter Bandbreite genutzt werden. Das digitale Zusatzsignal wird jedem RF-Tonträger mit reduziertem Hub, z.B. 20 % des Spitzenhubes, aufmoduliert. Zur Gewährleistung einer guten Kompatibilität mit den vorhandenen Bild- und Tonsignalen wird die digitale Basisband-Kanalcodierung so gewählt, daß die Energieverteilung des Spektrums möglichst gleichmäßig ist und daß das Spektrum auch in Modulationspausen eine Zufallsverteilung (pseudo-random) aufweist. Durch die bevorzugte Verkopplung der Taktfrequenz mit der Fernsehzeilenfrequenz und durch einen günstigen Frequenz-Offset der Taktfrequenz kann die Beeinflussung der vorhandenen Bild- bzw. Tonsignale minimiert werden. Außerdem wird durch die Frequenzverkopplung der Aufwand für die Taktregneration im Empfänger reduziert. Durch eine Kombination von mehrstufigen Kanalcodes (PKS, Duobinärcodes und ähnlichem) und bekannten bitratenreduzierten Toncodier-Verfahren, wie z.B. gemäß DE-PS 36 39 753, reicht die geschaffene, zusätzliche Übertragungskapazität aus, um ein hochwertiges digitales Stereosignalpaar mit CD-Qualität zusätzlich zu übertragen. In diesem digitalen Zusatzkanälen können aber auch die Zusatzsignale für eine Raumklangübertragung untergebracht werden. Anstelle von Tonkanälen oder auch zusätzlich zu den erwähnten Tonkanälen können Datensignale mit relativ hohen Bitraten übertragen werden. Die Anwendungen dafür sind vielfältig, z.B. für fernsehbegleitende Datendienste, wie Videotext, PAL-verbesserte Systeme, Fernsehsysteme mit geändertem Bildformat, Verschlüsselungssysteme, Pay-TV oder für unabhängige mobile oder stationäre Datendienste wie Verkehrslenkung, Katastrophendienst usw. Beim erfindungsgemäßen Verfahren wird durch die hohen Sendeleistungen der Fernsehsender und durch die fast ausschließliche Verwendung von Richtantennen auf der Sende- und Empfangsseite eine flächendeckende und extrem sichere Übertragung erreicht. Die Richtweite, Übertragungssicherheit und Fehlerrate des Systems ist abhängig vom Modulationsgrad des Zusatzsignals. Mindestens 20% des Modulationsgrades für den normalen Fernsehton sind zulässig, ohne daß Kompatibilitätsprobleme auftreten, was gleichbedeutend ist mit mindestens 10 kHz Hub für das digitale Zusatzsignal bei einem Spitzenhub von 50 kHz für das normale Fernsehtonsignal. Zum Senden der mit dem Basisbandsignal nach Fign. 2a und 2b FM-modulierten ersten und zweiten Tonträger nach Fig. 1 werden entsprechend dem Blockschaltbild nach Fig. 3a die digitalen Datensignale bzw. digitalisierten Tonsignale einem Quellen-Coder 10 zugeführt, welche im Falle von Tonsignalen gleichzeitig mit der Quellencodierung eine Bitratenreduktion vornimmt. Die quellencodierten Daten werden in einem nachfolgenden Kanal-Coder 20 mittels einer mehrstufigen Kanalcodierung so geformt, daß ihre spektralen Energieanteile möglichst gleichmäßig im Frequenzbereich oberhalb 15 kHz bis etwa 60 kHz verteilt sind. Hierzu kann beispielsweise eine mehrstufige PSK-Codierung, eine mehrstufige QAM-Codierung oder eine mehrstufige RSB- oder ESB-AM-Codierung vorgesehen werden, bei welcher auch in den Modulationspausen durch ein Pseudosignal eine gleichmäßige spektrale Verteilung gewährleistet wird. Bei Übertragung von niedrigen Datenkapazitäten, z.B. für eine sicherere Datenübertragung, können Duobinär- oder Biphase-Code vorgesehen werden. Vorzugsweise wird bei der Kanalcodierung die Taktfrequenz des kanalcodierten Signals mit der Fernsehzeilenfrequenz verkoppelt und die Taktfrequenz gegenüber der Fernsehzeilenfrequenz derart versetzt, daß gegenseitige Störungen zwischen dem kanalcodierten Signal und dem Fernsehbild- und -tonsignal minimiert werden. Die kanalcodierten Daten werden zusammen mit dem ggfs. komprimierten (Kompressor bzw. Kompander 30) analogen Fernsehtonsignal einem FM-Modulator 40 im Fernsehsender zugeführt, der diese Basisbandsignale frequenzmoduliert, verstärkt und über die Antenne 50 abstrahlt. Anstelle einer Kompression des analogen Fernsehtonsignals kann auch eine gesteuerte Preemphase in an sich bekannter Weise vorgesehen werden. Bei Verwendung von Kompressoren, Kompandern oder gesteuerter Preemphase für den vorhandenen analogen Tonkanal kann der Modulationsgrad für den digitalen Kanal deutlich erhöht werden und damit die Reichweite und die Übertragungssicherheit weiter verbessert werden. In fernab liegenden, kritischen Empfangsbereichen eines Fernsehsenders kann abhängig von der Bitfehlerrate des digitalen Tonsignals eine automatische Umschaltung auf das sichere analoge Tonsignal im Empfänger vorgesehen werden, wie anhand von Fig. 3b näher erläutert werden soll. Das an der Antenne 60 empfangene TV-Signal wird dem Empfangsteil 70 das Fernsehempfängers zugeführt, welcher das Bildsignal und die beiden FM-Tonträger separiert und entsprechenden Damodulatoren zuführt. Jeder der beiden FM-Tonträger kann mit den nachfolgenden, in Fig. 3b veranschaulichten Stufen verarbeitet werden. Beispielsweise wird der Tonträger 5,5 MHz (Ton 1) dem FM-Demodulator 80 zugeführt, welcher das demodulierte Basisbandsignal (Fig. 2a) an einen Kanaldecoder 90 und eine Deemphase-Stufe 110 (mit ggfs. integriertem Expander) weiterleitet. Der Kanal-Decoder 90 separiert aus dem Basisbandsignal den digitalen Daten-/Tonkanal im Frequenzbereich oberhalb 15 kHz (Fig. 2a) und nimmt die Kanalcodierung vor. Das kanalcodierte, digitale Daten-/Tonsignal wird in der nachfolgenden Stufe 100 einer Quellen-Decodierung unterzogen, im Falle eines Tonsignals außerdem einer Digital/Analogwandlung. Das zusätzliche Tonsignal am Anfang der Stufe 100 wird zusammen mit dem normalen Fernsehtonsignal am Ausgang der Deemphase-Stufe 110 einer Auswahlschaltung 120 zugeführt, welche in Abhängigkeit von der Fehlerrate des zusätzlichen Tonsignals entweder das zusätzliche Tonsignal (bei guter Qualität) oder das normale Fernsehtonsignal (bei hoher Fehlerrate des digitalen Tonsignals) an den Lautsprecher 130 durchschaltet. Eine weitere Möglichkeit besteht darin, daß die Auswahlschaltung 120 bei Anwendung einer 3-kanaligen Surround-Sound-Tonwiedergabe bei zu hoher Fehlerrate des digitalen Tonsignals auf eine ausschließlich normale Tonwiedergabe zurückschaltet.

Infolge der sendeseitigen Verkopplung der Taktfrequenz des kanalcodierten Signals mit der Fernsehzeilenfrequenz läßt sich empfangsseitig eine preisgünstige und robuste Taktrückgewinnung aus der Fernsehzeilenfrequenz erreichen.

Als digitale Dateninformationen kommen beispielsweise in Betracht:
- Stützinformationen zur Bildwiedergabe mit vergrößertem (z.B. 16:9) Bild-Seitenverhältnis;
- Informationen für mobile und/oder stationäre Verkehrslenkungssysteme;
- Entschlüsselungsinformationen für Pay-TV-Systeme, die entweder teilnehmerbezogen sind (z.B. Zu- oder Abschaltung der Teilnehmerberechtigung) oder allgemein bezogen sind (z.B. Abonnementzuteilung für eine Gruppe von Berechtigten);
- Personenrufinformationen (paging-system);
- digitale Schalt- und/oder Nachrichteninformationen für Katastrophendienste und andere Fernwirkeinrichtungen;
- Videotextdaten, z.B. Ergänzungsdaten für höhere Videotext-Level.

## Patentansprüche

1. Verfahren zur Übertragung von digital codierten Informationen, insbesondere Toninformationen, in einem Fernseh-Tonkanal, wobei auf mindestens einem vorhandenen, frequenzmodulierten RF-Tonträger oberhalb des Fernsehton-NF-Basisspektrums die digital codierte Information im Basisband als kanalcodiertes Signal mit einem derartigen Modulationshub eingefügt wird, daß empfangsseitige Störungen bei der Fernsehtonwiedergabe ausgeschlossen sind, und wobei das Spektrum des kanalcodierten Signals so geformt wird, daß es im wesentlichen gleichmäßig über den verfügbaren Frequenzbereich verteilt ist und diese Verteilung auch in Modulationspausen durch ein Pseudosignal aufrechterhalten wird, und wobei die Taktfrequenz des kanalcodierten Signals mit der Zeilenfrequenz verkoppelt ist.

2. Verfahren nach Anspruch 1, **dadurch gekennzeichnet**, daß die Taktfrequenz einen Frequenz-Offset gegenüber der Zeilenfrequenz aufweist.

3. Verfahren nach Anspruch 1 oder 2, **dadurch gekennzeichnet**, daß das kanalcodierte Signal duobinär- oder biphase- oder PSK- oder ESB-AM- oder QAM-codiert ist.

4. Verfahren nach einem oder mehreren der Ansprüche 1 bis 3, **dadurch gekennzeichnet**, daß das kanalcodierte Signal mehrstufig codiert ist.

5. Verfahren nach einem oder mehreren der Ansprüche 1 bis 4, **dadurch gekennzeichnet**, daß das Fernseh-Tonsignal komprimiert bzw. kompandiert wird und in Abhängigkeit davon der Modulationshub des kanalcodierten Signals erhöht wird.

6. Verfahren nach einem oder mehreren der Ansprüche 1 bis 5, **dadurch gekennzeichnet**, daß die digitale Information vor der Kanalcodierung einer Quellcodierung mit Datenreduktion unterzogen wird.

7. Verfahren nach einem oder mehreren der Ansprüche 1 bis 6, **dadurch gekennzeichnet**, daß die digitale Information Stützinformationen zur Bildwiedergabe mit vergrößertem Bild-Seitenverhältnis oder Informationen zur Entschlüsselung der Fernsehsignale oder Videotextdaten oder Informationen für mobile und/oder stationäre Verkehrslenkungssysteme oder Personenrufinformation oder Schalt- und/oder Nachrichteninformationen für Katastrophendienste bzw. Fernwirkeinrichtungen enthält.

8. Verfahren zum Empfang von digital codierten Informationen, die nach einem oder mehreren der Ansprüche 1 bis 7 übertragen werden, **dadurch gekennzeichnet**, daß der frequenzmodulierte RF-Tonträger FM-demoduliert wird und daß in dem FM-demodulierten Signal das kanalcodierte Signal von dem Fernsehtonsignal frequenzmäßig getrennt und einer Kanaldecodierung und/oder einer Quellencodierung unterzogen wird.

## Claims

1. Process for transmitting digitally coded information, in particular sound information, in a television sound channel, whereby the digitally coded information is inserted on at least one existing, frequency-modulated RF sound carrier as a channel-coded signal above the television sound audiofrequency base spectrum in the base band with such a modulation amplitude that disturbances on the receiver side during reproduction of the television sound are excluded, and whereby the spectrum of the channel-coded signal is so shaped that it is distributed essentially evenly over the available frequency range and this distribution is maintained even during mcdulation intervals by using a pseudo-signal, and whereby the clock frequency cf the channel-coded signal is coupled with the line frequency.

2. Process according to claim 1, **charact****erized in that** the clock frequency exhibits a frequency offset in relation to the line frequency.

3. Process according to claim 1 or 2, **characterized in that** the channel-coded signal is coded in duobinary or biphase or in PSK or ESB- AM or QAM form.

4. Process according to one or more of the claims 1 through 3, **characterized in that** the channel-coded signal is coded in multistep form.

5. Process according to one or more of the claims 1 through 4, **characterized in that** the television sound signal is compressed or, respectively, companded, and the modulation amplitude of the channel-coded signal is raised depending on that.

6. Process according to one or more of the claims 1 through 5, **characterized in that** the digital information is subjected to a source coding wich data reduction prior to the channel coding.

7. Process according to one or more of the claims 1 through 6, **characterized in that** the digital information contains support data for image reproduction with enlarged picture aspect ratio or data for decoding the television signals or teletext data or data for mobile and/or stationary traffic control systems or data for paging systems or switching and/or news data for disaster services or remote control installations.

8. Process for the reception of digitally coded information which is transmitted in accordance with the process according to one or more of the claims 1 through 7, **characterized in that** the frequency-modulated RF sound carrier is FM-demodulated, and that in the FM-demodulated signal, the channel-coded signal is separated from the television sound signal according to frequency, and subjected to a channel decoding and/or a source decoding.

## Revendications

1. Procédé destiné à la transmission d'informations codées numériques, notamment des données audio, dans un canal audio télédiffusé, avec lequel l'information codée numérique est véhiculée sous la forme d'un signal à canal codé par, au moins une, porteuse audio HF existante modulée en fréquence située au-dessus du spectre de base BF du son télédiffusé dans la bande de base avec une amplitude de modulation telle que les perturbations côté récepteur soient exclues lors de la reproduction du son télédiffusé, et avec lequel le spectre du signal à canal codé est configuré en sorte qu'il est essentiellement réparti de façon régulière sur la plage de fréquences disponible et que cette répartition est maintenue régulière même pendant les intervalles de modulation grâce à un pseudo signal, et avec lequel la fréquence d'horloge du signal à canal codé est couplée avec la fréquence ligne TV.

2. Procédé conforme à la revendication 1, caractérisé par le fait que la fréquence d'horloge présente un décalage en fréquence par rapport à la fréquence ligne.

3. Procédé conforme à la revendication 1 ou 2, caractérisé par le fait que le signal à canal codé est codé avec le procédé duobinaire ou biphase ou PKS ou bande latérale unique (BLU)-AM ou MAQ.

4. Procédé conforme à l'une ou à plusieurs des revendications 1 à 3, caractérisé par le fait que le signal à canal codé est codé à plusieurs niveaux.

5. Procédé conforme à l'une ou à plusieurs des revendications 1 à 4, caractérisé par le fait que le signal audio télédiffusé est comprimé ou comprimé - expansé et que l'amplitude de modulation du signal à canal codé est augmentée en fonction de cela.

6. Procédé conforme à l'une ou à plusieurs des revendications 1 à 5, caractérisé par le fait que l'information numérique est soumise à un codage source avec réduction des données avant codage de canal.

7. Procédé conforme à l'une ou à plusieurs des revendications 1 à 6, caractérisé par le fait que l'information numérique contient des informations support pour la reproduction de l'image avec un rapport d'image agrandi ou des informations pour le décryptage des signaux télédiffusés ou des données Vidéotexte ou des informations pour les systèmes mobiles et / ou stationnaires de surveillance du trafic ou des informations de recherche de personnes ou des informations de commutation et / ou d'information pour des services d'urgence ou des dispositifs commandables à distance.

8. Procédé destiné à la réception d'informations numériques codées, lesquelles sont transmises conformément à l'une ou à plusieurs des revendication 1 à 7, caractérisé par le fait que la porteuse audio HF modulée en fréquence est démodulée en fréquence et que, dans le signal démodulé en fréquence, le signal à canal codé est séparé en fréquence du signal audio télédiffusé et qu'il est soumis à un décodage de canal et / ou un de codage source.
